# EUROPEAN PATENT APPLICATION

(11) **EP 2 821 909 A1**
(43) Date of publication of application: **07.01.2015**
(21) Application number: 14173609.0
(22) Date of filing: 24.06.2014
(51) Int. Cl.: G06F 3/0488, G06F 3/0482, H04M 1/725

(54) **Electronic device and method for displaying status notification information**

(30) Priority: 01.07.2013 KR 20130076272
(71) Applicant: Samsung Electronics Co., Ltd, Gyeonggi-do 443-742 (KR)
(72) Inventor: Choi, Youngberm, 443-742 Gyeonggi-do (KR); Kim, Hyoungil, 443-742 Gyeonggi-do (KR)
(74) Representative: Jenkins, Richard Gavin

(57) **Abstract**

A technique to display status notification information in an electronic device is provided. In a method for displaying the status notification information, the device displays one or more status notification icons in a status notification region of a touch screen. Each of the status notification icons indicates a corresponding particular status of the device. When the device receives an input for selecting a specific area within the status notification region, the device recognizes the status notification icon located in the selected area, the device retrieves notification information in response to a result of the recognizing, and displays the retrieved notification information in a notification information display region of the touch screen.

## Description

### TECHNICAL FIELD

The present disclosure relates to a display of status notification information in an electronic device. More particularly, the present disclosure relates to an electronic device and method for displaying status notification information corresponding to a selected status notification icon.

### BACKGROUND

With the remarkable growth of technology, a great variety of portable electronic devices are increasingly popularized. Nowadays such portable electronic devices may offer many helpful functions including a voice call function, a video call function, a message transmission function, a music player function, a digital broadcasting receiver function, a short range communication function, an Internet access function, and the like.

Typically, in order to allow a user to check a current status of the user's device, the portable electronic device displays thereon real-time notification information about a current status thereof, such as a communication status, a battery charging status, a ringtone setting status, an alarm setting status, a message reception status, and the like, through suitable indicators.

The technique has, however, limitations in displaying notification information since a display region is limited to a single screen.

### SUMMARY

Aspects of the present disclosure are to address at least the above-mentioned problems and/or disadvantages and to provide at least the advantages described below. Accordingly, an aspect of the present disclosure is to provide a technique to simply and effectively check detailed notification information about a variety of operating, functional and/or setting statuses of an electronic device.

Another aspect of the present disclosure is to provide a technique to effectively perform a setting function corresponding to the checked notification information about the device.

In accordance with an aspect of the present disclosure, a method for displaying status notification information in an electronic device is provided. The method includes displaying one or more status notification icons in a status notification region of a touch screen, each of the status notification icons indicate a corresponding particular status of the device, receiving an input for selecting a specific area within the status notification region, recognizing the status notification icon located in the selected area, retrieving notification information in response to a result of the recognizing, and displaying the retrieved notification information in a notification information display region of the touch screen.

In accordance with an aspect of the present disclosure, an electronic device is provided. The electronic device includes a touch screen unit including a touch screen configured to display one or more status notification icons in a status notification region, each of the status notification icons indicating a corresponding particular status of the device, and to receive a touch input for selecting a specific area within the status notification region, and a control unit configured to recognize the status notification icon located in the selected area when the touch input is detected from the specific area within the status notification region, to retrieve notification information in response to a recognition result, and to control the touch screen to display the retrieved notification information in a notification information display region.

Other aspects, advantages, and salient features of the disclosure will become apparent to those skilled in the art from the following detailed description, which, taken in conjunction with the annexed drawings, discloses various embodiments of the present disclosure.

### BRIEF DESCRIPTION OF THE DRAWINGS

The above and other aspects, features, and advantages of certain embodiments of the present disclosure will be more apparent from the following description taken in conjunction with the accompanying drawings, in which:
FIGS. 1A and 1B show screenshots illustrating a technique to display status notification information about an electronic device having a touch screen according to an embodiment of the present disclosure.
FIG. 2 is a block diagram illustrating an electronic device according to an embodiment of the present disclosure.
FIG. 3is a flow diagram illustrating a method for displaying status notification information about an electronic device according to an embodiment of the present disclosure.
FIG. 4is a flow diagram illustrating a method for displaying status notification information about an electronic device according to an embodiment of the present disclosure.
FIGS. 5A, 5B, 5C, 6A, 6B, 7A, 7B, 8A and 8B show screenshots illustrating a technique to display status notification information about an electronic device according to an embodiment of the present disclosure.

Throughout the drawings, it should be noted that like reference numbers are used to depict the same or similar elements, features, and structures.

### DETAILED DESCRIPTION

The following description with reference to the accompanying drawings is provided to assist in a comprehensive understanding of various embodiments of the present disclosure as defined by the claims and their equivalents. It includes various specific details to assist in that understanding, but these are to be regarded as merely exemplary. Accordingly, those of ordinary skill in the art will recognize that various changes and modifications of the various embodiments described herein can be made without departing from the scope and spirit of the present disclosure. In addition, descriptions of well-known functions and constructions may be omitted for clarity and conciseness.

The terms and words used in the following description and claims are not limited to the bibliographical meanings, but are merely used by the inventor to enable a clear and consistent understanding of the present disclosure. Accordingly, it should be apparent to those skilled in the art that the following description of various embodiments of the present disclosure is provided for illustration purposes only and not for the purpose of limiting the present disclosure as defined by the appended claims and their equivalents.

It is to be understood that the singular forms "a," "an," and "the" include plural referents unless the context clearly dictates otherwise. Thus, for example, reference to "an icon" includes reference to one or more of such icons.

In this present disclosure, an electronic device, also referred to as a terminal, may include any type of device that has a structure like a touch screen in which a display unit can operate as a touch-sensitive input unit.

A status notification region is designed to indicate a basic notification about various operating, functional and/or setting statuses of the device, namely, a communication status, a battery charging status, a ringtone setting status, an alarm setting status, a message reception status, and an activation status of any application. The status notification region may be disposed, but not limited to, at any edge of the touch screen, such as an upper portion of the touch screen.

A status notification icon is displayed in the status notification region and is a kind of an indicator that indicates the status of the device. One or more such icons may be displayed in the status notification region, and each status notification icon may offer corresponding basic information about the status of the device. The status notification icon may represent corresponding status information through a change in display thereof or an adjustment in brightness thereof. For example, a communication status notification icon may represent a current communication connection status through a stepwise display activation, and a battery charging status notification icon may represent a current battery charging status through a stepwise display activation. Also, using a change in display, a ringtone status notification icon may indicate a ringtone status, a vibration status, or a mute status. Such status notification icons are exemplary only and not to be considered as a limitation of this disclosure. The technique disclosed herein may be also applied to other various status notification icons well known in the art.

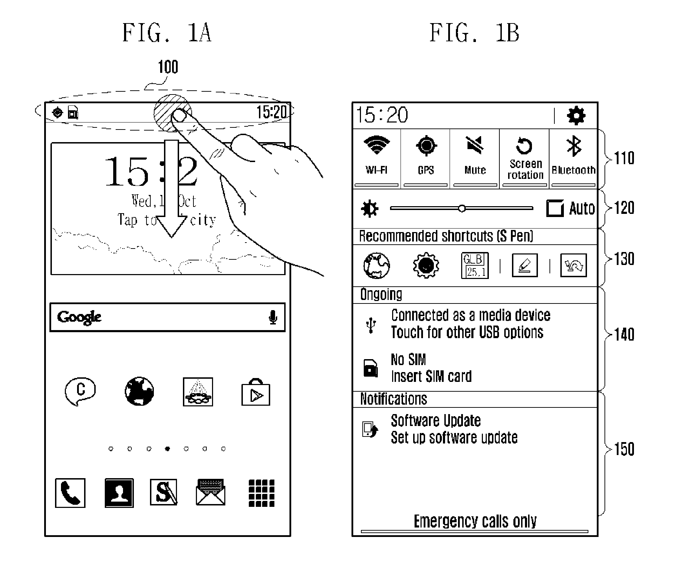

FIGS. 1A and 1B show screenshots illustrating a technique to display status notification information about an electronic device having a touch screen according to an embodiment of the present disclosure.

Referring to FIGS. 1A and 1B, the device includes a touch screen that acts as both a display unit and an input unit.

Referring to FIG. 1A, the touch screen contains a main screen region for displaying basic information, application access icons, and the like, and a status notification region 100 for indicating various operating, functional and/or setting statuses of the device. Typically, the status notification region 100 is disposed at an upper portion of the touch screen. One or more status notification icons are displayed in the status notification region 100as indicators that indicate a current status of the device. Each status notification icon represents corresponding status information through a change in display thereof or an adjustment in brightness thereof.

If any drag input is detected from the upper portion of the touch screen, detailed status notification information from 110 to 150 is displayed on a screen formed in response to the drag input. This information from 110 to 150 includes detailed information about predefined status notification items.

Referring to FIG. 1B, the predefined status notification items may include a main setting icon item 110, a screen brightness notification/adjustment item 120, a main application shortcut item 130, a current setting status notification item 140, and any other notification item 150.

The device offers basic status notification information about the device through the status notification icons in the status notification region 100 and, when a drag input is detected from the upper portion, offers the detailed status notification information from 110 to 150 about a predefined item.

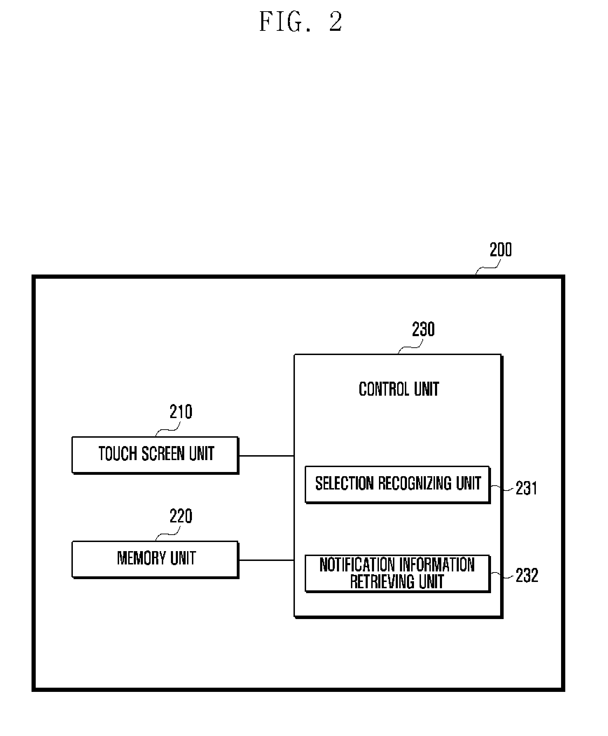

FIG. 2 is a block diagram illustrating an electronic device according to an embodiment of the present disclosure.

Referring to FIG. 2, the electronic device 200 may include a touch screen unit 210, a memory unit 220, and a control unit 230.

The touch screen unit 210 includes a touch screen in which a display unit can operate as a touch-sensitive input unit. While a screen is activated, the touch screen displays a status notification region offering one or more status notification icons. The status notification region may not only display the status notification icons, but may also receive a user's touch input. For example, the touch screen may receive a touch input for selecting any area within the status notification region. This touch input may be a touch input for selecting a specific one of the status notification icons, or a touch input for selecting an empty space in the status notification region. Additionally, the touch screen may receive a touch-and-drag input (e.g., a drag input following a touch input) that starts from the status notification region. Then the touch screen may display specific notification information retrieved by the control unit 230 in a notification information display region that is formed in response to the touch-and-drag input.

The memory unit 220 may store a variety of programs and data required for the operation of the device 200. The memory unit 220 may include a program region and a data region. The program region may store an operating system of the device 200 and any other essential or optional programs. Each of the stored programs offers a particular function under the control of the control unit 230. The data region may store various default data and any other data created during use. The data region may store information about various status notification icons that are displayed or to be displayed in the status notification region. Each of such status notification icons is predefined to be linked to specific status information of the device 200, and at least one of such status notification icons is selectively displayed in the status notification region.

The control unit 230 may control the whole operation of the device 200. When a touch input is detected from the status notification region of the touch screen, the control unit 230 may recognize the status notification icon located within a touched area and then retrieve the status notification information corresponding to the recognized status notification icon.

The control unit 230 may include a selection recognizing unit 231 and a notification information retrieving unit 232.

The selection recognizing unit 231 detects a touch input from any area in the status notification region of the touch screen and then recognizes the status notification icon located within the detected area. The selection recognizing unit 231 may recognize the status notification icon only when a touch input is detected exactly from the status notification icon or alternatively when a touch input is detected within an area that contains the status notification icon. The selection recognizing unit 231 may also recognize a single status notification icon, two or more status notification icons, or no status notification icon. Since the status notification region is somewhat small in size due to a physical limitation on the touch screen, a user may have some difficulty in touching a desired status notification icon properly. Therefore, according to an embodiment of the present disclosure, when a touch input is detected from any area in the status notification region, the status notification icon located within the detected area (i.e., the touched area), may be recognized. The detected area may contain one or more status notification icons or no status notification icon.

The notification information retrieving unit 232 may retrieve notification information in response to a recognition result of the selection recognizing unit 231. For example, when the selection recognizing unit 231 recognizes a single status notification icon, the notification information retrieving unit 232 retrieves specific notification information corresponding to the recognized status notification icon. Similarly, when the selection recognizing unit 231 recognizes two or more status notification icons, the notification information retrieving unit 232 retrieves specific notification information corresponding to each of the recognized status notification icons. If no status notification icon is recognized, the notification information retrieving unit 232 retrieves notification information that corresponds to one or more predefined status notification items. Then the notification information retrieving unit 232 may output the retrieved notification information to the notification information display region formed on the touch screen.

According to an embodiment of the present disclosure, it is possible to switch to a device function setting mode in a state where notification information is displayed in the notification information display region on the touch screen. Specifically, if an input for selecting one of items of the notification information displayed in the notification information display region is received, and if there is any function setting mode corresponding to the selected notification information, then the control unit 230 may switch to that mode. For example, in case specific items of notification information associated with a ringtone status notification are displayed and a ringtone type item is selected, the control unit 230 may switch the screen to a setting mode of ringtone type.

The above description about the control unit 230 is exemplary and not to be considered as a limitation of this disclosure. The control unit 230 may perform any other functions or operations of the device 200.

Although not illustrated in the drawings, the device 200 may further include additional elements, such as a wireless communication unit, a camera unit, a speaker, a battery, or the like.

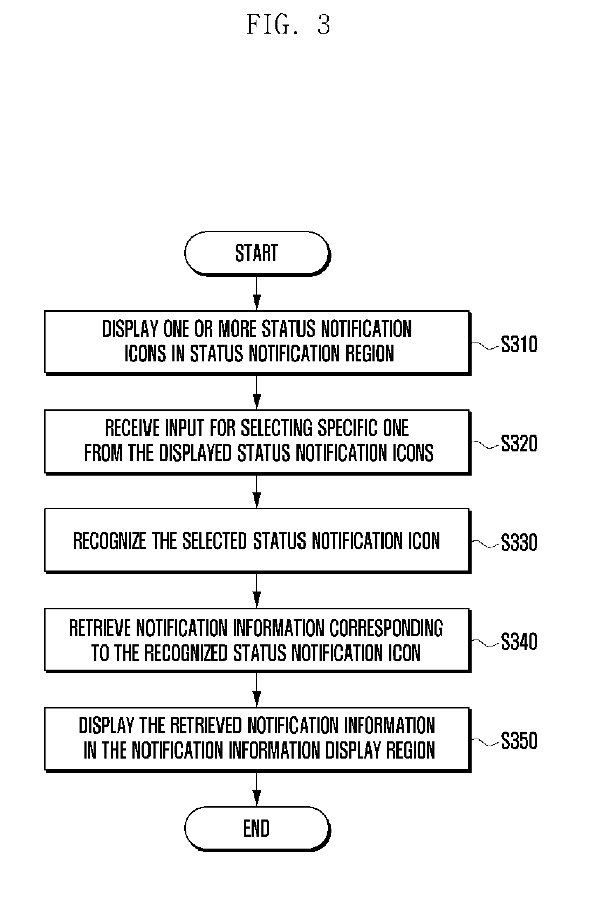

FIG. 3is a flow diagram illustrating a method for displaying status notification information about an electronic device according to an embodiment of the present disclosure.

Referring to FIG. 3, at operation S310, the touch screen unit 210 displays one or more status notification icons in the status notification region under the control of the control unit 230 when the touch screen is activated. The status notification icons displayed in the status notification region may be predefined as default or set by a user.

At operation S320, the touch screen unit 210 receives a touch input for selecting a specific one from the displayed status notification icons. The touch screen unit 210 may enlarge or separately display the selected icon in order to assist a user in exactly selecting a desired status notification icon.

At operation S330, the control unit 230 recognizes the selected status notification icon. The control unit 230 determines which status information of the device 200 is linked to the selected status notification icon.

At operation S340, the control unit 230 retrieves notification information corresponding to the recognized status notification icon. For example, when a ringtone status notification icon is recognized, current setting information about a ringtone type, a ringtone volume, a ringtone/vibration/mute status, and the like may be retrieved as corresponding notification information.

When specific notification information is retrieved, the control unit 230 controls the touch screen to display the retrieved notification information in the notification information display region at operation S350. For example, when a touch-and-drag input starting from the status notification icon is received, the notification information display region is formed in response to such a drag and then the retrieved notification information is displayed in the notification information display region.

When any input for selecting a specific status notification icon is received, the device 200 may offer status notification information corresponding to the selected status notification icon.

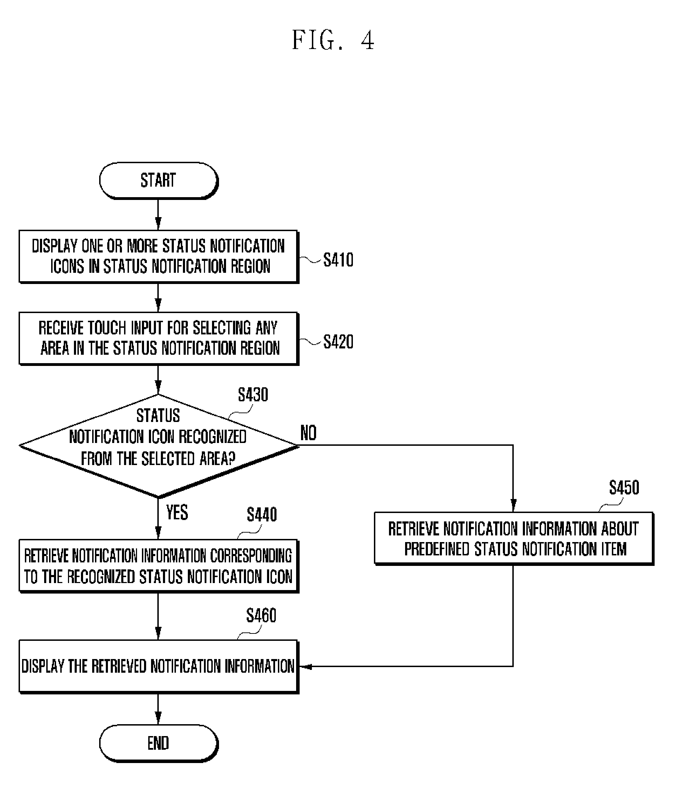

FIG. 4is a flow diagram illustrating a method for displaying status notification information about an electronic device according to an embodiment of the present disclosure.

Referring to FIG. 4, at operation S410, the touch screen unit 210 displays one or more status notification icons in the status notification region under the control of the control unit 230 when the touch screen is activated. The status notification icons displayed in the status notification region may be predefined as default or set by a user.

At operation S420, the touch screen unit 210 receives a touch input for selecting any area in the status notification region.

At operation S430, the control unit 230 recognizes a status notification icon located in the selected area. The control unit 230 may recognize one or more status notification icons. The maximum number of such recognized icons may be set as a suitable number for representing notification information. In a certain case, no status notification icon may be recognized.

If any status notification icon is recognized, the control unit 230 retrieves notification information corresponding to the recognized status notification icon at operation S440. In case two or more status notification icons are recognized, the control unit 230 retrieves notification information corresponding to each of the recognized status notification icons.

In contrast, if no status notification icon is recognized, the control unit 230 retrieves at operation S450 notification information that corresponds to one or more predefined status notification items. Predefined status notification items may include, but are not limited to, a main setting icon item, a screen brightness notification/adjustment item, a main application shortcut item, a current setting status notification item, and any other notification item.

When specific notification information is retrieved at operation S440 or S450, the control unit 230 controls the touch screen at operation S460 to display the retrieved notification information in the notification information display region. For example, when a touch-and-drag input starting from the status notification icon is received, the notification information display region is formed in response to such a drag and then the retrieved notification information is displayed in the notification information display region.

The device 200 may offer corresponding status notification information even though a user roughly selects an area near a desired status notification icon. Accordingly, a user can easily and conveniently check status information about the device 200.

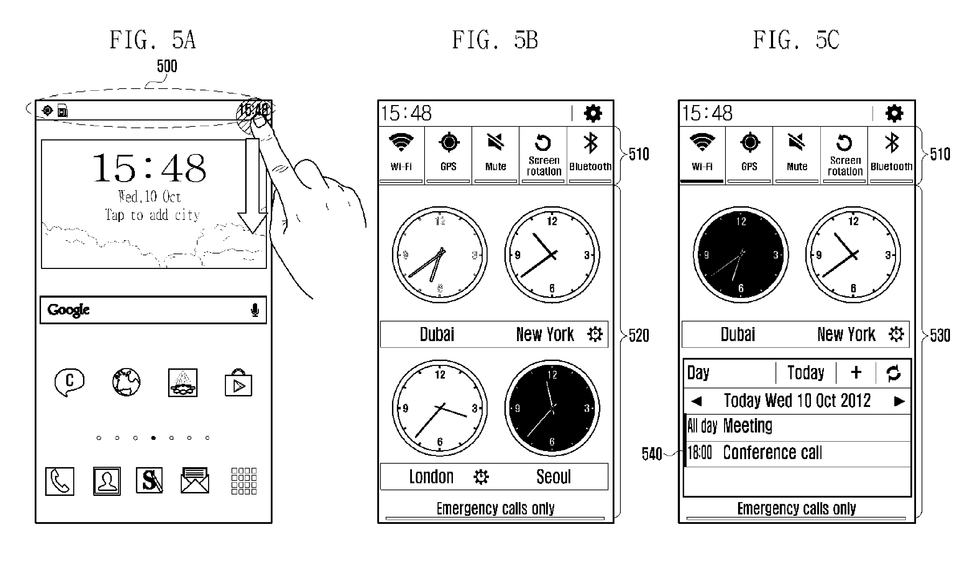

FIGS. 5A, 5B, 5C, 6A, 6B, 7A, 7B, 8A and 8B show screenshots illustrating a technique to display status notification information about an electronic device in according to various embodiments of the present disclosure.

FIGS. 5A, 5B, and 5C show screenshots illustrating a display screen of status notification information about a device in case a time status notification icon is recognized in response to a user's touch according to an embodiment of the present disclosure.

Referring to FIGS. 5A-5C, a user who desires to obtain detailed information associated with time may take a touch-and-drag action starting from a selected area in the status notification region. If the device recognizes a time status notification icon from the detection of a touch input, the device displays the status notification information retrieved in response to a recognition result on the screen formed by a drag input as shown in FIG. 5B.

The notification information display region formed in response to such a drag input may have a basic notification information display region 510 and a selective notification information display region 520. The basic notification information display region 510 which is assigned to indicate basic status notification information about the device may display main setting icon items, for example, as shown. The selective notification information display region 520 which is assigned to display status notification information corresponding to the recognized status notification icon may display detailed information about a time status in this embodiment.

Thereafter, if a predefined input such as a swipe input is detected from the notification information display region shown in FIG. 5B, a screen switch may be performed for the extension of the notification information display region as shown in FIG. 5C. When two or more pages contain status notification information, a screen switch may make it possible to offer the entire information contained in all pages.

Additionally, if a touch input is detected from a schedule status notification information item 540 displayed in the selective notification information display region 530 shown in FIG. 5C, the screen may be switched to a schedule setting mode (not shown).

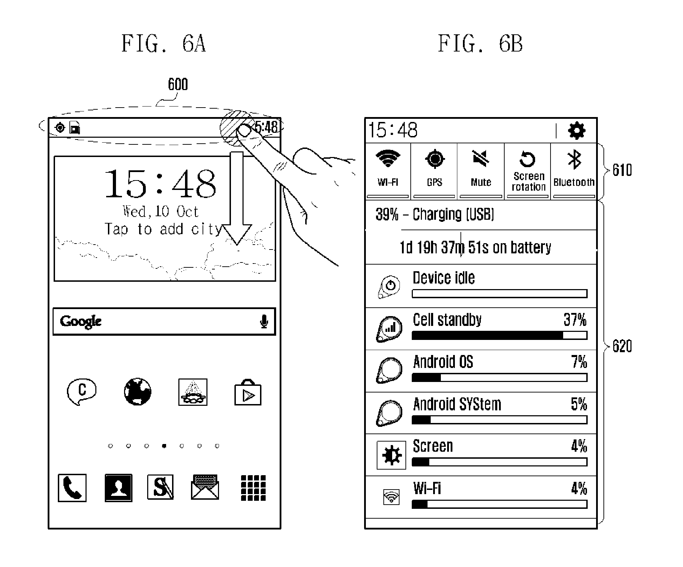

FIGS. 6A and 6B show screenshots illustrating a display screen of status notification information about a device in case a battery status notification icon is recognized in response to a user's touch according to an embodiment of the present disclosure.

Referring to FIGS. 6A and 6B, a user who desires to obtain detailed information associated with a battery status may perform a touch-and-drag action starting from a selected area in the status notification region 600. If the device recognizes a battery status notification icon from the detection of a touch input, the device displays the status notification information retrieved in response to a recognition result on the screen formed by a drag input as shown in FIG. 6B.

The notification information display region formed in response to such a drag input may have a basic notification information display region 610 for displaying basic notification information, and a selective notification information display region 620 for displaying detailed information about a battery status.

FIGA. 7A and 7B show screenshots illustrating a display screen of status notification information about a device in case a wireless internet status notification icon is recognized in response to a user's touch according to an embodiment of the present disclosure.

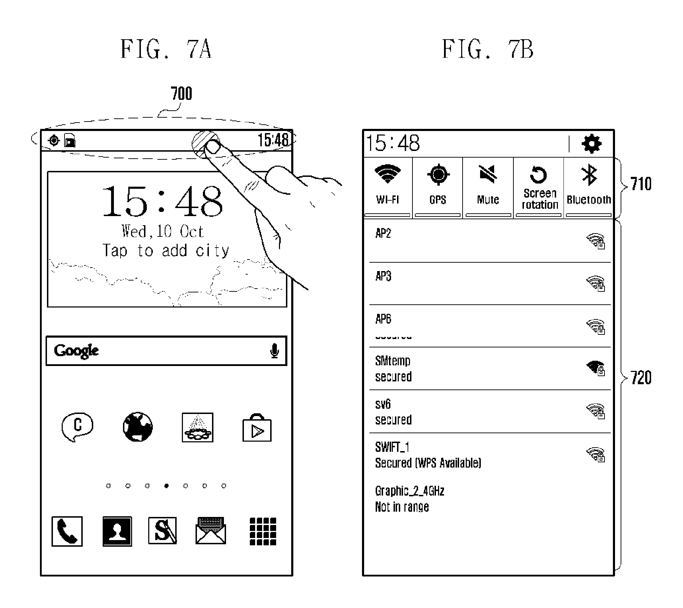

Referring to FIGS. 7A and 7B, a user who desires to obtain detailed information associated with a wireless internet status may take a touch-and-drag action starting from a selected area in the status notification region 700. If the device recognizes a wireless network status notification icon from the detection of a touch input, the device displays the status notification information retrieved in response to a recognition result on the screen formed by a drag input as shown in FIG. 7B.

The notification information display region formed in response to such a drag input may have a basic notification information display region 710 for displaying basic notification information, and a selective notification information display region 720 for displaying detailed information about a wireless internet status.

Additionally, if a touch input is detected from one of wireless network status notification information items displayed in the selective notification information display region 720 shown in FIG. 7B, a connection with the selected wireless network may be established or the screen may be switched to a setting mode for the selected wireless network.

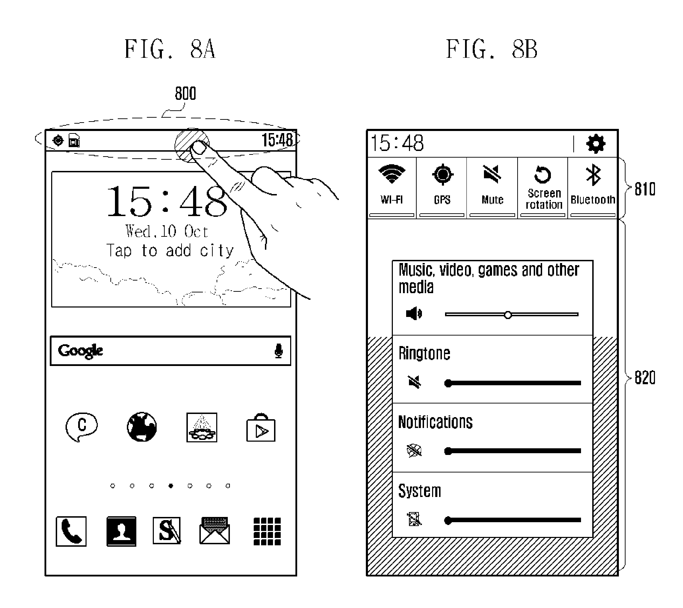

FIGS. 8A and 8B show screenshots illustrating a display screen of status notification information about a device in case a sound status notification icon is recognized in response to a user's touch according to an embodiment of the present disclosure.

Referring to FIGS. 8A and 8B, a user who desires to obtain detailed information associated with a sound status may take a touch-and-drag action starting from a selected area in the status notification region 800. If the device recognizes a sound status notification icon from the detection of a touch input, the device displays the status notification information retrieved in response to a recognition result on the screen formed by a drag input as shown in FIG. 8B.

The notification information display region formed in response to such a drag input may have a basic notification information display region 810 for displaying basic notification information, and a selective notification information display region 820 for displaying detailed information about a sound setting status of the device.

According to another embodiment of the present disclosure, the device may recognize two or more status notification icons from a user's touch input in the status notification region.

For example, although not shown, the wireless network status notification icon shown in FIGS. 7A and 7B and the sound status notification icon shown in FIGS. 8A and 8B may be recognized at the same time in response to a user's touch input. In this case, the device may retrieve both the wireless network status notification information and the sound status notification information and then display the retrieved notification information in the notification information display region.

In this case, two types of the notification information retrieved in response to respective icons may be displayed distinctively on the same screen. Alternatively, two types of the notification information may be displayed on different screens that allow a screen switch function discussed previously in FIGS. 5A, 5B, and 5C.

According to embodiments of the present disclosure, a user of an electronic device can check detailed notification information about a variety of operating, functional and/or setting statuses of the device in an intuitive manner. A user can effectively manipulate the device by invoking a setting mode for such operating, functional and/or setting statuses of the device from the displayed notification information.

Various aspects of the present disclosure can also be embodied as computer readable code on a non-transitory computer readable recording medium. A non-transitory computer readable recording medium is any data storage device that can store data which can be thereafter read by a computer system. Examples of the non-transitory computer readable recording medium include Read-Only Memory (ROM), Random-Access Memory (RAM), CD-ROMs, magnetic tapes, floppy disks, and optical data storage devices. The non-transitory computer readable recording medium can also be distributed over network coupled computer systems so that the computer readable code is stored and executed in a distributed fashion. Also, functional programs, code, and code segments for accomplishing the present disclosure can be easily construed by programmers skilled in the art to which the present disclosure pertains.

At this point it should be noted that various embodiments of the present disclosure as described above typically involve the processing of input data and the generation of output data to some extent. This input data processing and output data generation may be implemented in hardware or software in combination with hardware. For example, specific electronic components may be employed in a mobile device or similar or related circuitry for implementing the functions associated with the various embodiments of the present disclosure as described above. Alternatively, one or more processors operating in accordance with stored instructions may implement the functions associated with the various embodiments of the present disclosure as described above. If such is the case, it is within the scope of the present disclosure that such instructions may be stored on one or more non-transitory processor readable mediums. Examples of the processor readable mediums include Read-Only Memory (ROM), Random-Access Memory (RAM), CD-ROMs, magnetic tapes, floppy disks, and optical data storage devices. The processor readable mediums can also be distributed over network coupled computer systems so that the instructions are stored and executed in a distributed fashion. Also, functional computer programs, instructions, and instruction segments for accomplishing the present disclosure can be easily construed by programmers skilled in the art to which the present disclosure pertains.

While the present disclosure has been shown and described with reference to various embodiments thereof, it will be understood by those skilled in the art that various changes in form and details may be made therein without departing from the spirit and scope of the present disclosure as defined by the appended claims and their equivalents.

## Claims

1. A method for displaying status notification information in an electronic device, the method comprising:
displaying one or more status notification icons in a status notification region of a touch screen, each of the status notification icons indicating a corresponding particular status of the device;
receiving an input for selecting a specific area within the status notification region;
recognizing the status notification icon located in the selected area;
retrieving notification information in response to a result of the recognizing; and
displaying the retrieved notification information in a notification information display region of the touch screen.

2. The method of claim 1, wherein the retrieving of the notification information comprises retrieving the notification information corresponding to the recognized status notification icon.

3. The method of claim 2, wherein the retrieving of the notification information comprises retrieving the notification information associated with at least one predefined item if no status notification icon is recognized as the result of the recognizing.

4. The method of claim 1, wherein the status notification region is disposed at an edge of the touch screen, and
wherein the receiving of the input comprises detecting a touch input from the specific area within the status notification region.

5. The method of claim 4, wherein the displaying of the notification information comprises, when a drag input following the touch input is detected in the receiving of the input, forming the notification information display region in response to the drag input, and displaying the retrieved notification information in the notification information display region.

6. The method of claim 1, further comprising:
if another input for selecting a specific information item from the displayed notification information is received, switching to a mode for setting a particular function corresponding to the selected information item.

7. The method of claim 1, further comprising:
predefining the status notification icons to be displayed in the status notification region.

8. An electronic device comprising:
a touch screen unit including a touch screen configured to display one or more status notification icons in a status notification region, each of the status notification icons indicating a corresponding particular status of the device, and to receive a touch input for selecting a specific area within the status notification region; and
a control unit configured to recognize the status notification icon located in the selected area when the touch input is detected from the specific area within the status notification region, to retrieve notification information in response to a recognition result, and to control the touch screen to display the retrieved notification information in a notification information display region.

9. The electronic device of claim 8, wherein the control unit is further configured to retrieve the notification information corresponding to the recognized status notification icon.

10. The electronic device of claim 9, wherein the control unit is further configured to retrieve the notification information associated with at least one predefined item if no status notification icon is recognized.

11. The electronic device of claim 8, wherein the status notification region is disposed at an edge of the touch screen.

12. The electronic device of claim 11, wherein the control unit is further configured to control the touch screen, when a drag input following the touch input is detected, to form the notification information display region in response to the drag input, and to display the retrieved notification information in the notification information display region.

13. The electronic device of claim 8, wherein the control unit is further configured to, if another input for selecting a specific information item from the displayed notification information is received, switch to a mode for setting a particular function corresponding to the selected information item.

14. The electronic device of claim 8, further comprising:
a memory unit configured to store a plurality of status notification icons including the status notification icons displayed in the status notification region,
wherein the control unit is further configured to predefine the status notification icons to be displayed among the stored status notification icons.

15. The electronic device of claim 8, wherein the control unit is further configured to, when two or more status notification icons are recognized as located in the selected area, display notification information corresponding to each of the recognized two or more status notification icons.
